# EUROPEAN PATENT SPECIFICATION

(11) **EP 1 772 362 B1**
(45) Date of publication and mention of the grant of the patent: **20.08.2008**
(21) Application number: 06020880.8
(22) Date of filing: 04.10.2006
(51) Int. Cl.: B62K 11/00, B62M 7/00

(54) **Motorcycle with a hydrogen storing container**
Motorrad mit einem Wasserstoffbehälter
Motocyclette avec un réservoir d'hydrogène

(30) Priority: 04.10.2005 JP 2005290741
(43) Date of publication of application: 11.04.2007
(73) Proprietor: Yamaha Hatsudoki Kabushiki Kaisha, Iwata-shi, Shizuoka 438-8501 (JP)
(72) Inventor: Kobayashi, Kenji, Iwata-shi Shizuoka-ken 438-8501 (JP)
(74) Representative: Grünecker, Kinkeldey, Stockmair & Schwanhäusser Anwaltssozietät

(56) References cited:
- EP-A- 1 132 251
- EP-A- 1 398 263
- FR-A1- 2 875 749
- JP-A- 2005 112 095
- US-A1- 2003 094 324

## Description

The present invention relates to a motorcycle **according to the preamble of independent claim 1. Such a motorcycle is** equipped with a hydrogen storing container including a hydrogen storing container for storing hydrogen to be supplied to a fuel cell system. A motorcycle as indicated above can be taken from the prior art document EP 1 398 263 A1.

Conventionally, fuel cell driven type electric vehicles have been used, in which hydrogen is supplied to a fuel cell system as fuel and the vehicle runs using the electric power produced by the fuel cell system (see for instance JP-A-2005-104494). This fuel cell driven type electric vehicle includes a fuel tank for storing hydrogen fuel. Hydrogen fuel stored in the storing tank is supplied from a dispenser device including a filling hose, and refill is made. Also, in this fuel cell driven type electric vehicle, a grounding cable extending from the dispenser device is connected to a key for opening a cap member of the fuel tank, and static electricity charged on a vehicle body is emitted to the ground via the grounding cable and dispenser device when the cap member is open by the key.

However, in the conventional fuel cell driven type electric vehicle mentioned above, an grounding work is complicated because grounding of the vehicle body is made with a long grounding cable extending from the dispenser device. Also, a refilling work of hydrogen fuel is trouble some because hydrogen fuel is refilled with the filling hose put into the fuel tank provided in the vehicle body.

The present invention is made to manage the mentioned problem, and the object of the present invention is to provide a motorcycle as indicated above such that work for grounding and refilling of hydrogen fuel is facilitated.

**According to the present invention said object is solved by a motorcycle having the features of independent claim 1. Preferred embodiments are laid down in the dependent claims.**

**Accordingly, it is provided** a motorcycle comprising a fuel-cell system, a replaceable hydrogen storing container for storing hydrogen to be supplied to the fuel-cell system, said hydrogen storing container being supported by a vehicle body of the motorcycle, and a parking stand, wherein the hydrogen storing container and the parking stand are electrically connected via a current-carrying member, such that the hydrogen storing container can be grounded via the current-carrying member and the parking stand when the motorcycle is rested on the parking stand.

Preferably, the current-carrying member includes an attachment means provided on the vehicle body and having electric conductivity, and a ground wire connecting the attachment means and the parking stand; wherein the hydrogen storing container is detachably coupled to the attachment means and is connectable to the parking stand via the attachment means and the ground wire for grounding when the hydrogen storing container is coupled with the attachment means.

According to a preferred embodiment, a first coupling part for coupling the hydrogen storing container to the attachment means and a first connecting part for supplying hydrogen are provided to the hydrogen storing container, and a second coupling part capable of detachably coupling to the first coupling part, and a second connecting part for transporting hydrogen capable of detachably connecting to the first connecting part are provided on the attachment means, wherein the ground wire is connected to the second coupling part so that the first coupling part and the second coupling part contact before the first connecting part for supplying hydrogen and the second connecting part for transporting hydrogen contact each other when the hydrogen storing container is connected to the attachment means.

Therein, a bracket made of an electric conductor provided with a gripped part for carrying the hydrogen storing container may be mounted on the hydrogen storing container, and the first coupling part may be provided on the bracket.

Therein, the first coupling part and the second coupling part may include a positioning mechanism for positioning the hydrogen storing container into a predetermined position to the attachment means.

Further, preferably an insertion hole is provided either one of the first coupling part or the second coupling part, and a guide shaft is provided on the respectively other such that the guide shaft is insertable into the insertion hole while being contacted with a periphery of the insertion hole.

According to a further preferred embodiment, the motorcycle may comprise: a drum part provided on either one of the first connecting part for supplying hydrogen or the second connecting part for transporting hydrogen; an interconnecting hole provided on the respectively other such that the drum part is fitted to the interconnecting hole and interconnects in an airtight manner; a valve body provided on the first connecting part for supplying hydrogen such that the valve body is urged to one side to block the space between the drum part and the interconnecting hole; a protruding element provided on the second connecting part for transporting hydrogen such that the protruding element urges the valve body to the other side and interconnects the drum part and the interconnecting hole when the drum part is engaged with the interconnecting hole; wherein the drum part and the interconnecting hole interconnect when the hydrogen storing container is made approach toward the attachment means and the drum part engages with the interconnecting hole while the guide shaft is inserted into the insertion hole.

Therein, a locking mechanism may be provided such that the locking mechanism actuates and fixes the hydrogen storing container to the attachment means when the drum part engages with the interconnecting hole.

Therein, the locking mechanism may include a locked part and a locking part that are capable of engagement, and either one of the locked part or the locking part may be provided on the hydrogen storing container and the other may be provided on the attachment means.

In the following, the present invention is explained in greater detail with respect to several embodiments thereof in conjunction with the accompanying drawings, wherein:
- FIG.1: is a perspective view showing a motorcycle according to an embodiment,
- FIG.2: is a side view of a motorcycle,
- FIG.3: is a perspective view showing the state that a hydrogen cylinder is coupled to an attachment,
- FIG.4: is a plan view of FIG.3,
- FIG.5: is a side view of FIG.3,
- FIG.6: is a front view of FIG.3,
- FIG.7: is a cross-sectional view showing a connector and a connector adapter before being coupled,
- FIG.8: is a cross-sectional view showing the state that a connector is fitted to a fitting recess of a connector adapter,
- FIG.9: is a cross-sectional view showing the state that a connector is further fitted to a fitting recess of a connector adapter,
- FIG.10: is a cross-sectional view showing the state that a connector and a connector adapter are interconnected,
- FIG.11: is a cross-sectional view showing the state that an interconnection between a connector and connector adapter is released,
- FIG.12: is a perspective view showing an attachment,
- FIG.13: is a plan view of FIG.12,
- FIG.14: is a rear view of FIG.12,
- FIG.15: is a front view of FIG.12,
- FIG.16: is a side view of FIG.12,
- FIG.17: is a cross-sectional view showing a locking part,
- FIG.18: is a front view showing a locking part,
- FIG.19: is a side view showing a ground wire in a motorcycle,
- FIG.20: is a perspective view showing the state that a hydrogen cylinder is coupled to an attachment, and
- FIG.21: is a side view showing the state that an attachment and a bracket of a hydrogen cylinder contact.

### Descriptions of Reference Numerals:

10: motorcycle, 10a: vehicle body, 30: hydrogen cylinder, 32: bracket, 34: connector, 34a: groove part, 35a and 35b: insertion holes, 35: gripped part, 35c: locked part, 36: gas supplying path, 36a: accommodating recess, 36b: gas emitting part, 37: shutoff valve, 37a: valve body, 40: attachment, 42a and 42b: guide shafts, 43: locking part, 44: connector adapter, 50: ground wire, 53: fitting recess, 53a: accommodating recess, 53b: connecting hole, 53c: gas emitting part, 54: shutoff valve releasing pin, 54b: pressing pin, 57: wedge-shaped engaging part, 60: parking stand

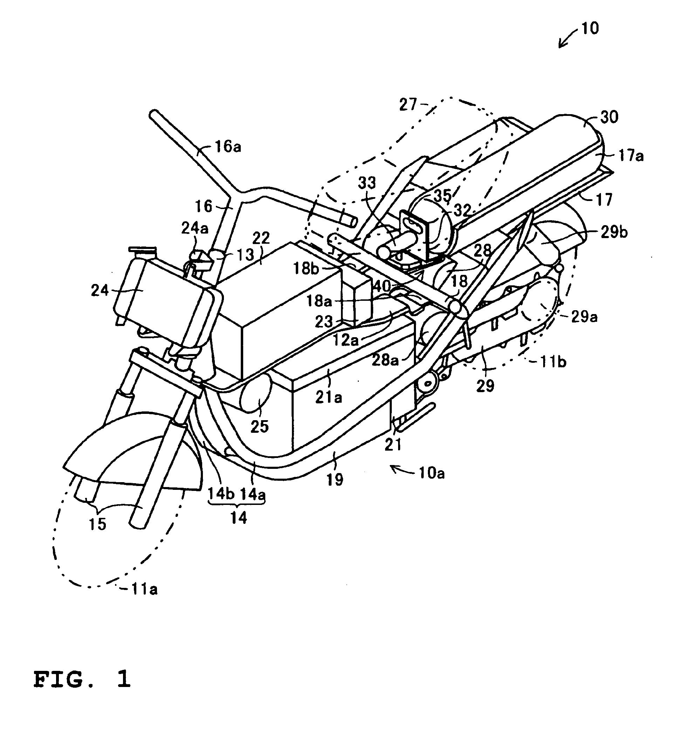

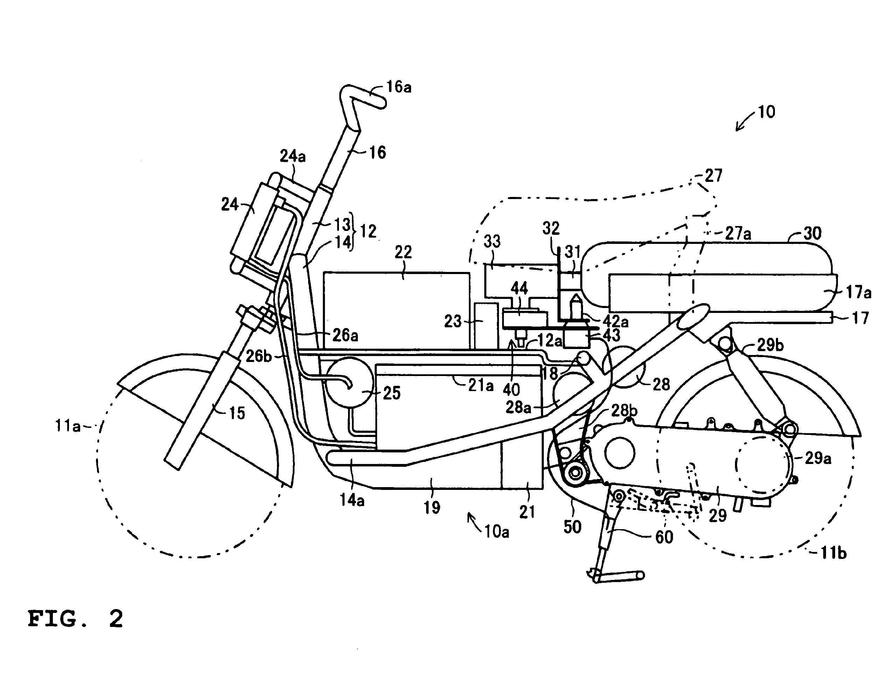

Hereinafter, a motorcycle equipped with a hydrogen storing container according to an embodiment will be described with reference to the attached drawings. FIG.1 and FIG.2 show a motorcycle 10 as a motorcycle equipped with a hydrogen storing container according to the embodiment. This motorcycle 10 includes a pair of wheels having a front wheel 11 a and a rear wheel 11 b and a vehicle body 10a to which the pair of wheels is attached. Also, the vehicle body 10a includes a vehicle body frame 12 configuring the major part of the vehicle body 10a and a subframe 12a detachably mounted on the vehicle body frame 12. The vehicle body frame 12 is constructed with a head pipe 13 configuring the front side part of the vehicle body 10a and a down tube 14 extending rearward from the head pipe 13.

Also, the front wheel 11 a is supported in a rotatable manner by the lower end of a front fork 15 which lower part branches into two parts. That is, both the lower ends of the front fork 15 support both the sides of the horizontal center axle of the front wheel 11 a (not shown) in a rotatable manner. Thereby, the front wheel 11 a is rotatable around the horizontal center axle. The lower end of a steering shaft 16 disposed in the head pipe 13 is coupled to the upper end of the front fork 15. This steering shaft 16 is placed in the head pipe 13 such that the steering shaft 16 is rotatable in the direction around the axis of the head pipe 13, and its upper end is extended upward from the head pipe 13. Handlebars 16a are coupled to the upper end of the steering shaft 16.

Therefore, when the handlebars 16a are operated to rotate and the steering shaft 16 is rotated in the direction around the axis, the front wheel 11 a changes its direction in left or right according to the amount of rotation of the steering shaft 16. Handgrips (not shown) are provided at both the left and right ends of the handlebars 16a. One of the handgrips are provided such that it is rotatable in the axial direction, and not only used as a gripped part held by a hand but also configures an accelerator operation element for adjusting a rotating speed of a driving motor 29a mentioned below. The other handgrip is fixed on the handlebars 16a and used as a gripped part held by a hand. At the vicinity of the handgrips, brake levers (not shown) are provided such that each of levers is pushed away from the handgrip and attempts to stop a rotation of the front wheel 11 a or the rear wheel 11 b by being pulled to the handgrip side.

A downtube 14 is configured with a pair of main frames 14a and 14b, and the front end (upper end) is coupled to both sides of the lower side part of the head pipe 13. Each of the main frames 14a and 14b which front end is coupled to the front end of the head pipe 13, extends slantingly downward in the rear direction and then curves, and projected horizontally in the rear direction so as to widen the interval between each other starting at the part where they are coupled to the head pipe 13. Moreover, the rear end parts of the main frames 14a and 14b extend slantingly upward in the rear direction keeping the interval between each other. The rear ends of the main frames 14a and 14b are coupled to a board-like mounting member 17 disposed in the horizontal direction.

A cross member 18 is laid over the upper surfaces at the rear side parts of the main frames 14a and 14b. Both the ends of this cross member 18 are formed into a bar shape bending about right angle, both the bent ends are coupled to the main frames 14a and 14b, and the main body part is projected toward the upper surface of the main frame 14a and 14b. Board-like mounting pieces 18a and 18b such that each of them includes a tapped hole (not shown) are provided on both the ends of the cross member 18. An installation board 19 projecting downward of the main frames 14a and 14b is laid at the lower ends of the main frames 14a and 14b.

The upper surface of this installation board 19 is formed into a recess, and a fuel cell accommodating part 21 is provided in the recess. This fuel cell accommodating part 21 is configured in a box body which the opening at the upper surface can be opened and closed by a lid 21a, and a fuel cell system (not shown) is accommodated inside. The board-like subframe 12a is placed between the front side part of the downtube 14 and the cross member 18 provided at the rear part of the downtube 14. An attachment piece with a bolt insertion hole extending frontward or rearward is provided on each of both sides of the front end and both sides of the rear end of this subframe 12a.

Also, a board-like attachment piece which a tapped hole is provided at each of the left and right sides (not shown) is provided on the upper side part at the front part of the downtube 14, and the front end of the subframe 12a is fixed at the front part of the downtube 14 such that the attachment pieces at both sides of the front end are individually aligned with the attachment pieces provided on the downtube 14 and both the attachment pieces are fixed by attachment bolts (not shown). The rear end of the subframe 12a is fixed at the rear part of the downtube 14 such that the attachment pieces at both the sides of the rear end are individually aligned with the attachment pieces 18a and 18b provided on the cross member 18 and both the attachment pieces 18a and 18b and so forth are fixed by attachment bolts. A secondary cell 22 is fixed at the place slightly in front of the longitudinal center on the upper surface of the subframe 12a, and a control unit 23 including a controller is fixed at the rear side on the upper surface of the subframe 12a.

A radiator 24 is placed at the front part of the head pipe 13 via a fixation member 24a, and a water pump 25 is placed in front of the fuel cell accommodating part 21 at the front side part of the downtube 14 and in the place below the subframe 12a. The radiator 24 and the water pump 25 are connected by a coolant piping 26a for the outward entering way of a round flow. This coolant piping 26a is extended from the water pump 25 toward the fuel cell accommodating part 21, entering to the inside of the fuel cell accommodating part 21 through the front surface, and connected to the fuel cell system.

A coolant piping 26b for the returning way of a round flow extends is extending toward the radiator 24 via the front surface of the fuel cell accommodating part 21 from the fuel cell system. These coolant piping 26a and 26b are attached below and along the subframe 12a and the downtube 14. Therefore, when the water pump 25 is actuated, the coolant in the radiator 24 is sent to the fuel system through the coolant piping 26a, and the fuel cell system is cooled down. The coolant that have absorbed heat in cooling the fuel cell system down returns to the radiator 24 through the coolant piping 26b, and is cooled down while passing through the radiator 24.

A tray 17a formed about into a trough shape which a curved wall is formed at its rear end is provided on one of the left and right sides (the right side in FIG.1 and the left side of the vehicle body 10a) on the upper surface of the attachment member 17 coupled to the rear ends of the main frames 14a and 14b. A hydrogen cylinder 30 is placed on this tray 17a as a hydrogen storing container of the present embodiment which the hydrogen to be supplied to the fuel cell system is filled. This hydrogen cylinder 30 is connected to the fuel cell system in the fuel cell accommodating part 21 via an attachment 40 and a gas piping (not shown), and hydrogen fuel inside is supplied to the fuel cell system as hydrogen gas via the attachment 40 and the gas piping.

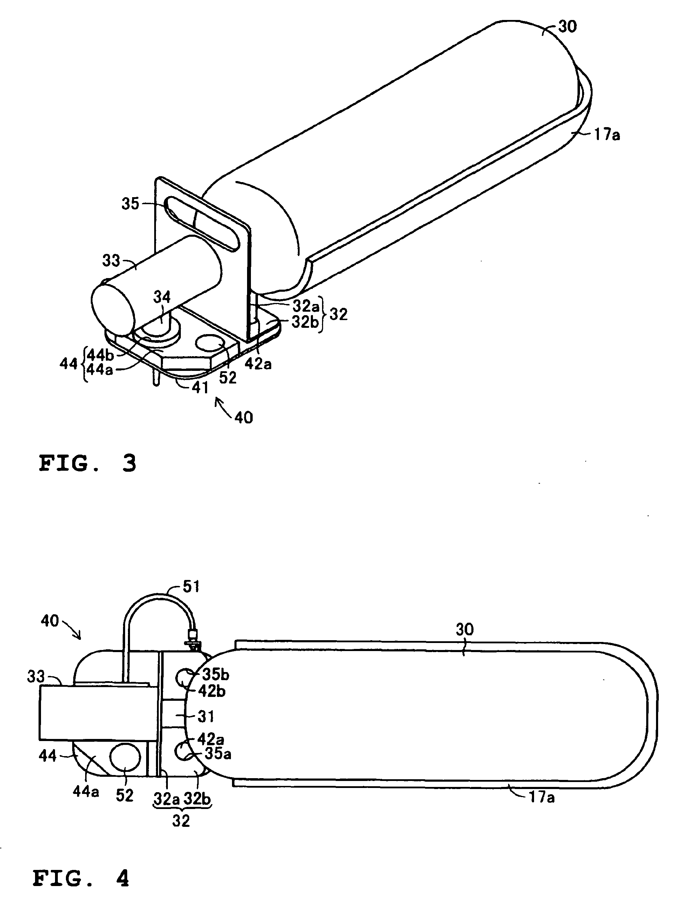

The hydrogen cylinder 30 and the attachment 40 are assembled as shown in FIGs.3 through 6. That is, the bracket 32 as the coupled part of the present embodiment and a regulator 33 for regulating pressure on the present embodiment are fixed at the drum opening 31 formed on the one end (front end) of the hydrogen cylinder 30, and a connector 34 as the connecting part for supplying hydrogen of the present embodiment is provided at the center of the lower part of the regulator 33. The hydrogen cylinder 30 is coupled to the attachment 40 via the bracket 32 and the connector 34.

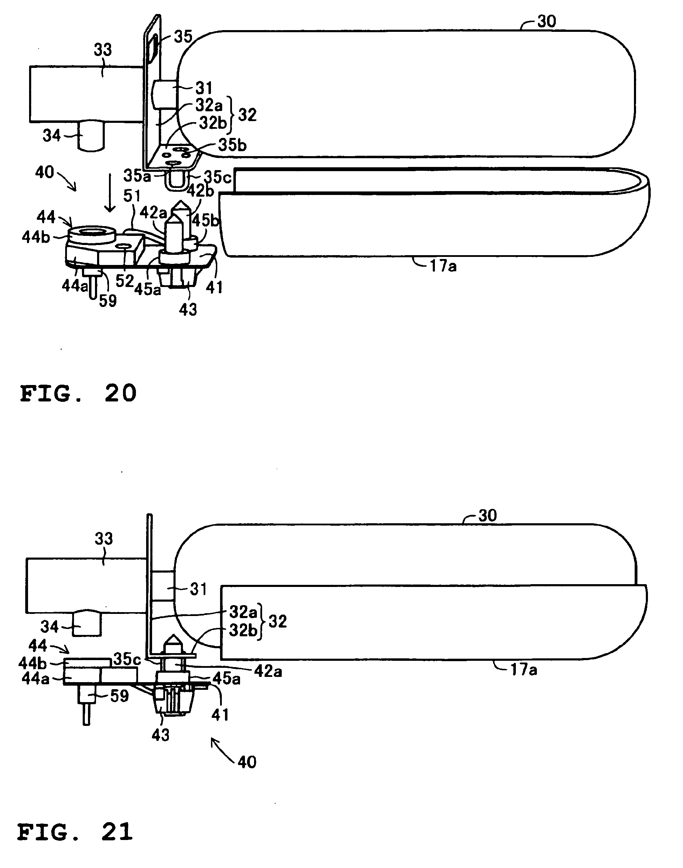

The bracket 32 includes a vertical piece 32a fixed on the outer peripheral surface of the drum opening 31 to cross the drum opening 31 in right angle, and a horizontal piece 32b extending to the main body of the hydrogen cylinder 30 from the lower end of the vertical piece 32a. A fixation hole is provided at the center of the vertical piece 32a. The edge around this hole is fixed to the drum opening 31, and thereby the vertical piece 32a is fixed to the drum opening 31. A gripped part 35 configured with a laterally long hole is formed at the upper side of the vertical piece 32a, and insertion holes 35a and 35b are formed at both the left and right sides of the horizontal piece 32b. A locked part 35c in approximately U-shape (see FIG.20) is formed downward between the insertion holes 35a and 35b on the lower surface of the horizontal piece 32b. This locked part 35c is fixed on the horizontal piece 32b with both the ends oriented in front-and-rear direction.

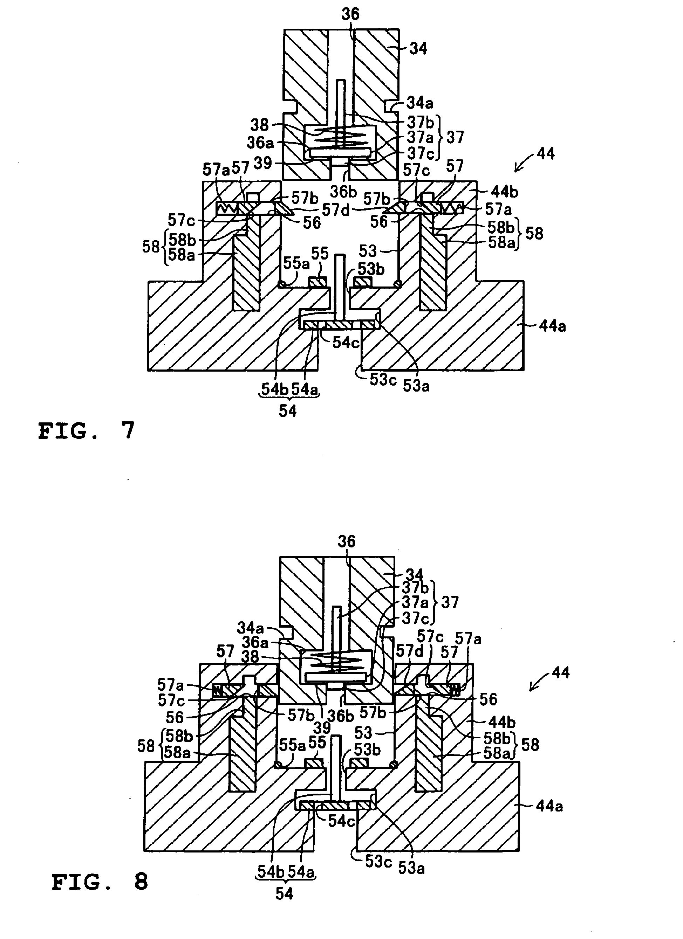

The configuration inside the connector 34 is as shown in FIGs.7 through 11. That is, the connector 34 is configured with a drum body which the part along the center axis is formed into a gas supplying path 36 for supplying hydrogen gas, and, at lower inside, an accommodating recess 36a is formed such that its diameter is larger than the diameter of the gas supplying path 36. Also, a gas emitting part 36b with a diameter slightly smaller than the diameter of the gas supplying path 36 is formed at the place below the accommodating recess 36a of the connector 34. A shutoff valve 37 and a spring 38 for pushing the shutoff valve 37 downward are placed in the accommodating recess 36a.

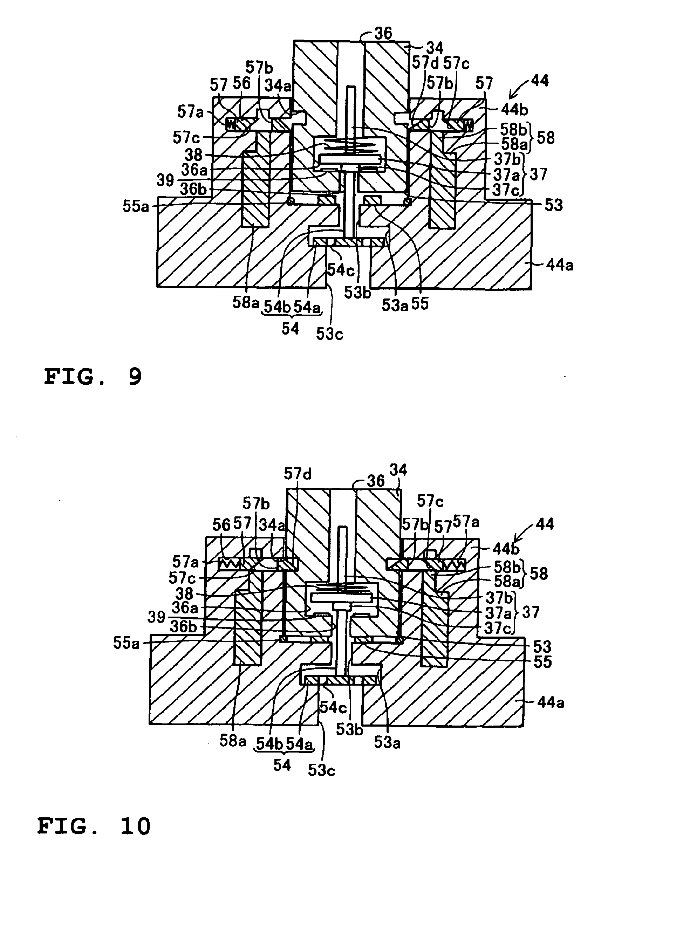

The shutoff valve 37 is configured with a disc-shaped valve body 37a movable in vertical direction in the accommodating recess 36a, a bar-shaped part 37b extending upward from the center of the upper surface of valve body 37a in the gas supplying path 36, and a disc-shaped part 37c projected downward from the center of the lower surface of the valve body 37a. The disc-shaped part 37c enters into the gas emitting part 36b when the valve body 37a is positioned at the lower side in the accommodating recess 36a. The disc-shaped part 37c lifts up from the inside of the gas emitting part 36b and is positioned in the accommodating recess 36a when the valve body 37a is positioned at the upper side in the accommodating recess 36a (in the condition of FIG.10).

The spring 38 is with a coil spring and placed between the ceiling part of the accommodating recess 36a and the upper surface of the valve body 37a with the bar-shaped part 37b positioned inside. The spring 38 pushes the shutoff valve 37 downward to block the gas emitting part 36b. A sealing member 39 is provided on the bottom surface of the accommodating recess 36a. The lower surface of the valve body 37a tightly contacts the sealing member 39 when the shutoff valve 37 is urged by the spring 38 and lowered, and a blocking of the gas emitting part 36b is made more securely. A groove part 34a for engagement is formed in a predetermined part positioned slightly upward of the accommodating recess 36a on the outer peripheral surface of the connector 34.

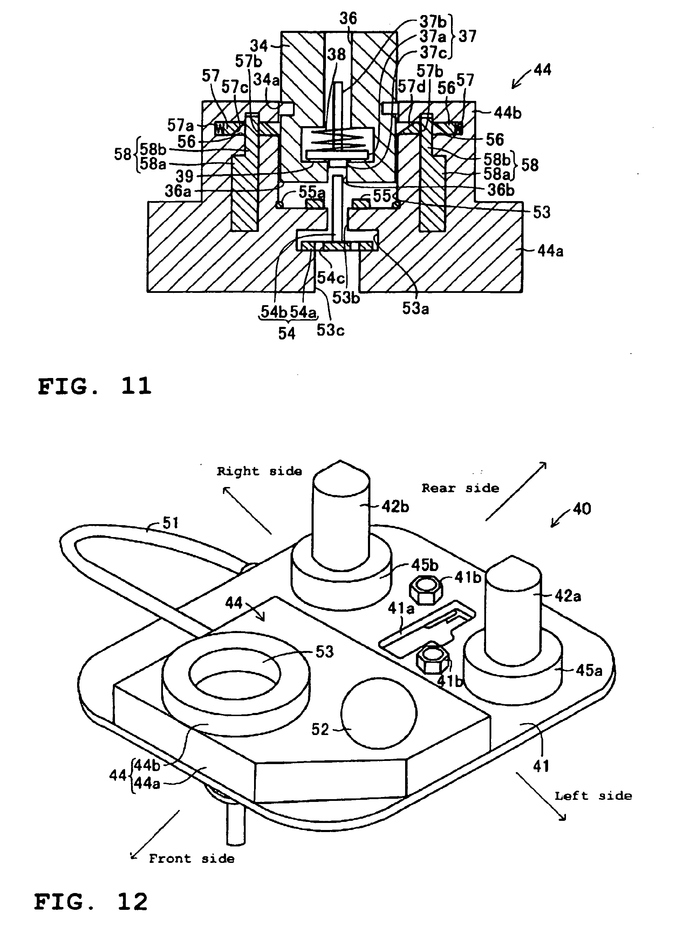

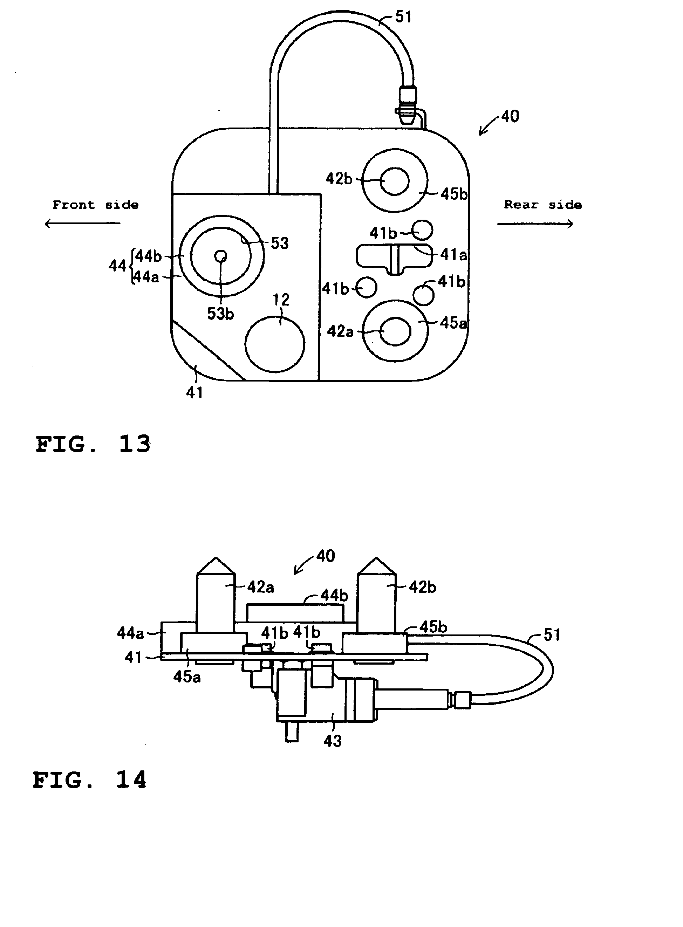

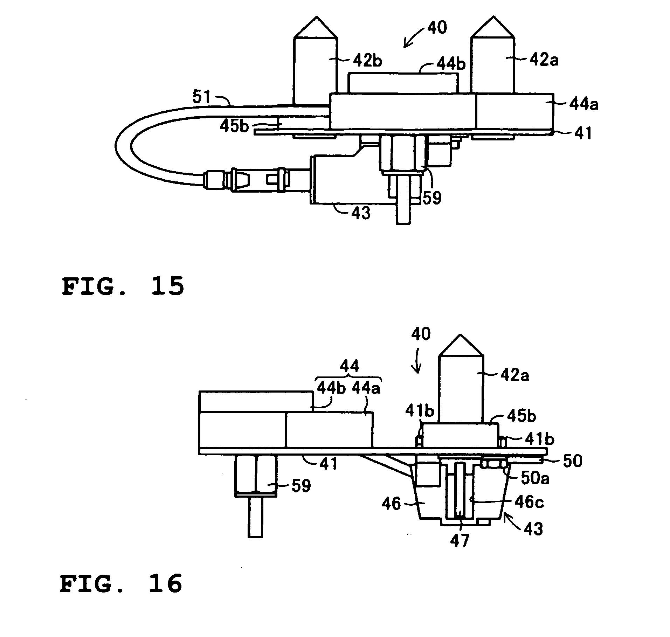

The attachment 40 is constructed as shown in FIGs.12 through 16, and the rear side part forms the coupling part of the present embodiment, the front side part forms the connecting part for transporting hydrogen of the present embodiment. That is, this attachment 40 is constructed such that a pair of guide shafts 42a and 42b, a locking part 43 and a connector adopter 44 are provided on a base plate 41. The guide shafts 42a and 42b are formed such that they are spaced apart each other and pass through the base plate 41 at both left and right side on the lower surface of the base plate 41 to extend upward of the base plate 41, and the upper end is formed into a cone shape. The guide shafts 42a and 42b are capable of inserting into insertion holes 35a and 35b of the bracket 32, and touch the flanges of the insertion hole 35a and 35b of the bracket 32 when they are inserted into the insertion holes 35a and 35b of the bracket 32. These guide shafts 42a and 42b and the insertion holes 35a and 35b of the bracket 32 form the positioning mechanism of the present embodiment.

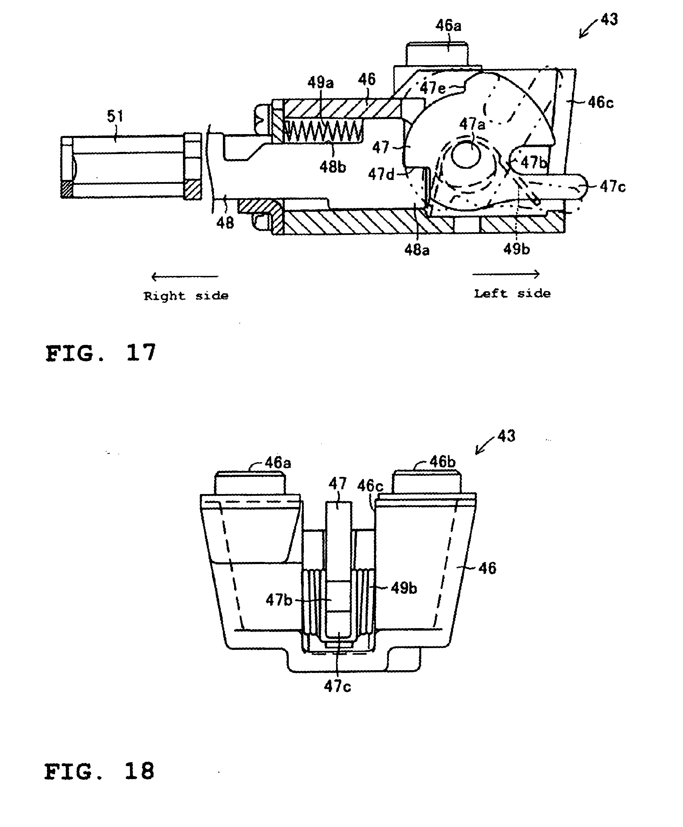

Cushions 45a and 45b are provided individually on the peripheries of the guide shafts 42a and 42b on the upper surface of the base plate 41. An impact between the bracket 32 and the attachment 40 is reduced by these cushions 45a and 45b when the guide shafts 42a and 42b are inserted into the insertion holes 35a and 35b and the bracket 32 is coupled to the attachment 40. A rectangular through hole 41 a elongated in front-and-rear direction is formed in the part between the guide shafts 42a and 42b on the base plate 41, and a locking part 43 is attached in the part where the through hole 41a on the lower surface of the base plate 41 is positioned via a bolt 41 b. This locking part 43 is formed as shown in FIGs.17 and 18. That is, this locking part 43 includes a casing member 46 having fixation parts 46a and 46b fixed on the lower surface of the base plate 41, a locking plate 47, a lever 48, and springs 49a and 49b.

The casing member 46 is formed into approximately a rectangular-box-shape extending in left-and-right direction from the vehicle body 10a. The casing member 46 will be illustrated with the right side in FIG.17 as the left side of the vehicle and the left side as the right side of the vehicle body. A notch recess 46c is formed such that it interconnects with the through hole 41 a from the central part in front-and-rear direction on the left side surface of this casing member 46 to the left side part on the upper surface. The locking plate 47 is configured with a rotating plate placed on a shaft part 47a spanned over both the front and rear sides of the casing member 46 in a rotatable manner.

This locking plate 47 includes an engagement recess 47b that the locked part 35c provided on the bracket 32 is capable of engaging with and an engagement piece 47c projected outside (left side) of the edge on the lower side of the engagement recess 47b. Moreover, a locking recess 47d is formed at the part nearly opposite to the engagement recess 47b on the outer periphery of the locking plate 47 in the left-and-right direction, a stopper recess 47e is formed in the part between the engagement recess 47b and the locking recess 47d. The lever 48 is configured with a bar body in which a locking part 48a capable of engagement with the locking recess 47d at the lower part of its tip and a spring accommodating recess 48b is formed at the upper part, and disposed movably in the front-and-rear direction inside the casing member 46.

The spring 49a is a coil spring, accommodated between the casing member 46 and the accommodating recess 48b, and pushes the lever 48 to the left side. The spring 49b is configured with a coil spring which locking parts are formed at both the ends, urges the locking plate 47 counterclockwise with positioning the axis part 47a inside the main body. A cable 51 is extends from the rear end of the lever 48, the tip of the cable 51 is connected to a releasing device 52 installed on a base part 44a of the connector adapter 44 formed at the front side of the base plate 41. The operating part of this releasing device 52 is configured with a pushbutton, and the lever 48 can be moved rearward when the pushbutton is pushed.

Thus, when the locked part 35c is not locked to the locking part 43, the locking plate 47 is urged by the elasticity of the spring 49b so that the engagement recess 47b faces upward, and becomes the state shown by a chain double-dashed line in FIG.17. In this case, the stopper recess 47e contacts a predetermined part in the casing member 46, and the locking plate 47 does not rotate in the counterclockwise direction in FIG.17 any more. The bracket 32 is lowered, and the locked part 35c engages with the engagement recess 47b. When the bracket 32 is lowered more against the elasticity of the spring 49b, the locking plate 47 rotates in the clockwise direction in FIG.17.

The lever 48 moves forward by the elasticity of the spring 49a when the locking recess 47d rotates to the position of the locking part 48a, and the locking recess 47d and the locking part 48a engage. Thereby, the locking plate 47 rests in the state shown by the solid line in FIG.17. In that situation, the locked part 35c keeps being engaged with the engagement recess 47b and locked to the locking plate 47. When the engagement between the locked part 35c and the locking plate 47 is to be released, the lever 48 is moved rearward through the operation of the releasing device 52, and then the engagement between the locking recess 47d and the locking part 48a is released.

Thereby, the locking plate 47 rotates counterclockwise by the recovering force of the spring 49b and becomes in the state of the chain double-dashed line in FIG.17. In this situation, the locked part 35c can be disengaged from the locking part 43 when the bracket 32 is lifted. A fixation member 50a is placed at the part adjacent to the locking part 43 on the lower surface of the base plate 41, and one end of the ground wire 50 is connected to the attachment 40 by the fixation member 50a.

The connector adapter 44 includes the base part 44a and a drum part 44b such that it is formed above the base part 44a and its length in the axis direction is short. The inside of the drum part 44b is formed into a fitting recess 53 which the connector 34 can fit, and an accommodating recess 53a for installing a shutoff valve releasing pin 54 as the protruding element of the present invention at the part corresponding to the place below the fitting recess 53 at about the center in the up-and-down direction of the base part 44a. The fitting recess 53 and the accommodating recess 53a are interconnected by a connecting hole 53b, a gas emitting part 53c is formed between the lower end of the accommodating recess 53a and the lower surface of the base part 44a.

The diameter of the accommodating recess 53a is set smaller than the diameter of the fitting recess 53, and the diameter of gas emitting part 53c is set smaller than the diameter of the accommodating recess 53a. Moreover, the diameter of the connecting hole 53b is set smaller than the diameter of the gas emitting hole 53c. The interconnecting hole of the present embodiment is configured with these fitting recess 53, connecting hole 53b, accommodating recess 53a and gas emitting part 53c. The shutoff valve releasing pin 54 is formed with a disc-shaped valve body 54a movable in the vertical direction in the accommodating recess 53a and a pressing pin 54b extending upward in the fitting recess 53 inserted into the connecting hole 53b from the center on the upper surface of the valve body 54a. A gas hole 54c for passing hydrogen gas toward the gas emitting part 53c from the accommodating recess 53a is formed on the valve body 54a.

A ring-shaped sealing member 55 is placed on the periphery of the connecting hole 53b on the bottom surface of the fitting recess 53, an attachment groove is formed on the outer periphery on the bottom surface of the fitting recess 53, and an O-ring 55a is attached in the attachment groove. Therefore, when the connector 34 is fitted into the fitting recess 53, the pressing pin 54b of the shutoff valve releasing pin 54 contacts with the disc-shaped part 37c of the shutoff valve 37, and the valve body 37a of the shutoff valve 37 is moved upward in the accommodating recess 36a. As a result, the gas supplying path 36 of the connector 34 and so forth and the fitting recess 53 of the connector adapter 44 and so forth are interconnected.

A plurality of guide holes 56 is formed at the predetermined part on the inner peripheral surface of the drum part 44b such that the guide holes 56 extends from the inner peripheral surface of the drum part 44b toward the outer peripheral surface of the drum part 44b. A wedge-shaped engaging part 57 and a spring 57a that is disposed in the deeper side of the guide hole 56 and urges the wedge-shaped engaging part 57 toward the fitting recess 53 are accommodated. A guide hole 57b is provided such that it passes through the wedge-shaped engaging part 57 at the near-center of the wedge-shaped engaging part 57 in the up-and-down direction, and the side surface at the rear side of this guide hole 57b is formed into a sloped surface 57c so that the width of the guide hole 57b at the upper part is smaller than the width at the lower part.

A lock releasing mechanism 58 is provided such that it can lift up the sloped surface 57c of the guide hole 57b toward the place below the near-center part of the guide hole 56 and move the wedge-shaped engaging part 57 to the deeper side of the guide hole 56. This lock releasing mechanism 58 is constructed with a drum-shaped base 58a and a thin drum-shaped cam 58b formed at above the drum-shaped base 58a, and the upper end of the drum-shaped cam 58b is formed into a smooth surface with projection and recess. This lock releasing mechanism 58 is also connected to the releasing device 52, rotates in the direction around the axis by the operation of the releasing device 52, and moves the wedge-shaped engaging part 57 toward the deeper side of the guide hole 56 against the spring 57a when the projection at the upper end of the drum-shaped cam 58b is positioned at the sloped surface 57c of the wedge-shaped engaging part 57. A sloped surface 57d facing upward is formed at the tip of the wedge-shaped engaging part 57, and the tip of the wedge-shaped engaging part 57 is capable of engaging with the groove part 34a of the connector 34.

Therefore, when the connector 34 is entered into the fitting recess 53 from the state in FIG.7, the periphery on the lower end of the connector 34 pushes the sloped surface 57d on the tip of the wedge-shaped engaging part 57, and the connector 34 moves down moving the wedge-shaped engaging part 57 toward the deeper side of the guide hole 56. When the connector 34 moves down lower from the state in FIG.9 and the groove part 34a of the connector 34 reaches the position of the wedge-shaped engaging part 57, the wedge-shaped engaging part 57 is moved toward the fitting recess 53 due to the recovering force of the spring 57a and engages with the groove part 34a. Thereby, as shown in FIG.10, the connector 34 is fixed to the connector adapter 44, and the gas supplying path 36 of the connector 34 and so forth and the fitting recess 53 of the connector adapter 44 and so forth are interconnected.

In this case, the sealing member 55 contracts by being pressed by the lower surface of the connector 34 and is positioned at the height same as the O-ring 55a. The gap between the outer peripheral surface of the connector 34 and the inner peripheral surface of the fitting recess 53 is sealed by the sealing member 55 and the o-ring 55a. When the engagement between the connector 34 and the connector adapter 44 is to be released, the lock releasing mechanism 58 rotates by the operating of the releasing device 52, as shown in FIG.11, and the projection on the upper end of the drum-shaped cam 58b pushes the sloped surface 57c aside, enters into the guide hole 57b and moves the wedge-shaped engaging part 57 toward the deeper side of the guide hole 56 against the spring 57a. The locking mechanisms of the present embodiment are formed with the combinations of this groove part 34a and the wedge-shaped engaging part 57, and the locked part 35c and the locking part 43 mentioned above. A connecting member 59 is fixed at the part corresponding to the gas hole 54c on the lower surface of the base plate 41, and a gas piping is connected to the connector adapter 44 via the connecting member 59.

A seat 27 is disposed above the front side part of the hydrogen cylinder 30. This seat 27 is coupled to the rear side of the downtube 14 via a supporting member 27a. An air cleaner 28 is placed in the rear of the cross member 18 at the rear side part of the downtube 14, and an air compressor 28a is placed in the front of the cross member 18 at the rear side part of the downtube 14. The air cleaner 28 and the air compressor 28a, and the air compressor 28a and the fuel cell system are respectively connected by gas piping (not shown). The outside air is aspirated via the air cleaner 28 when the air compressor 28a actuates and supplied to the fuel cell system. Then, foreign objects in the air are removed while passing through the air cleaner 28.

A rear arm configured with a pair of arm members extending rearward (not shown) is connected to the lower part at the rear side part of the downtube 14 via a coupling member 28b. Both the sides of the horizontal center shaft of the rear wheel 11 b is supported at the rear ends of both the arm members of the rear arm in a rotatable manner, and, thereby, the rear wheel 11 b is rotatable around the horizontal center shaft. A motor unit 29 is placed on the outside surface of one of the arm members of the rear arm as covering the arm member. The driving motor 29a and a speed reducer actuated with electricity produced by the fuel cell system are accommodated in the motor unit 29. The rear wheel 11 b rotates with the actuation of the driving motor 29a, and the motorcycle 10 runs.

Rear cushions 29b are disposed between the rear ends of the downtubes 14 and the upper parts of the rear ends of the rear arm. The rear side of the rear arm is configured to be capable of oscillating with the expansion and contraction of this rear cushion 29b. A drum brake (not shown) is placed at the side of the inside surface of the motor unit 29. The driving motor 29a actuates according to the displacement of the handgrip operation with control of the controller included in the control unit 23, and automatically produces drive force for the rear wheel 11 b. The driving motor 29a stops actuating with control of the controller when the brake lever is operated.

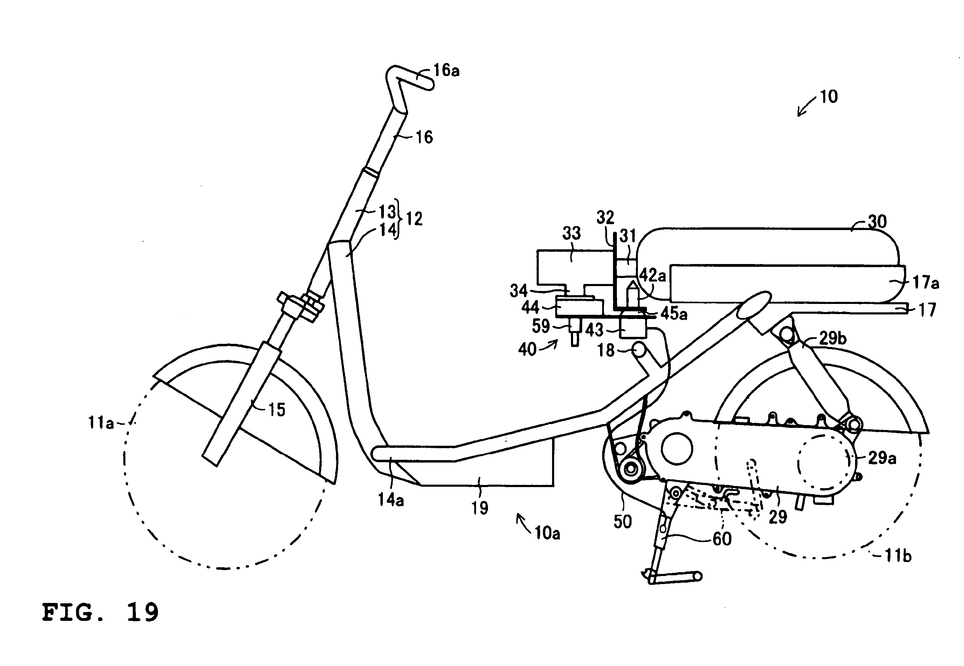

This motorcycle 10 includes a pivoting type parking stand 60 for keeping the motorcycle 10 standing while at rest. When the motorcycle 10 is to run, the parking stand 60 is lifted up as shown by the chain double-dashed line in FIG.2. When the motorcycle 10 is to be rested, the parking stand 60 is put down as shown by the solid line in FIG.2, and the motorcycle 10 is supported by the parking stand 60. The other end of a ground wire 50 extending from the attachment 40 is connected to the parking stand 60. Therefore, when the motorcycle 10 is rested, the attachment 40 is grounded via the ground wire 50 and the parking stand 60 as shown in FIG.19. In addition, in FIG.19, the fuel cell system and each device included for actuating the fuel cell system are omitted to make the wiring condition of the ground wire 50 clear.

The fuel cell system makes the oxygen in the air supplied from the air compressor 28a and the hydrogen supplied from the hydrogen cylinder 30 react to produce water and electricity. The secondary cell 22 discharges according to the necessity as a supplemental power source. The controller controls the water pump 25, the air compressor 28a, and the driving motor 29a based on the operation of the handgrip by a driver and programs set beforehand. In addition, though not shown, this motorcycle 10 includes a covering member for covering the outside of a predetermined part so that the radiator 24 and each device of the hydrogen cylinder 30 and so forth cannot be seen from outside for an improvement of the design. Moreover, the motorcycle 10 includes a power source switch for starting (not shown).

In this configuration, a driver straddles the seat 27 first when a driver rides on the motorcycle 10. Next, the power source switch is turned on. Thereby, air is supplied from the air compressor 28a to the fuel cell system, hydrogen is supplied from the hydrogen cylinder 30, and the fuel cell system makes the oxygen and the hydrogen in the air react to produce electricity. Then, the fuel cell system is cooled down by the coolant sent from the water pump 25, and maintains a predetermined temperature. The fuel cell system emits the water produced in the reaction between oxygen and hydrogen with exhaust gas to the outside.

Next, the handgrip is operated according to the velocity to be accelerated. Thereby, the controller actuates the driving motor 29a, and produces drive force for the rear wheel 11 b. When the running speed of the motorcycle 10 is reduced, the brake lever is operated according to the necessity. Thereby, the motorcycle 10 reduces its speed according to the degree of the brake operation. When the running of the motorcycle 10 is finished, the power source switch is turned off, and the parking stand 60 is pivoted downward so as to be grounded, and therefore the motorcycle 10 is kept standing.

When hydrogen fuel in the hydrogen cylinder 30 runs out and the hydrogen cylinder 30 is exchanged, the releasing device 52 is operated with the parking stand 60 being pivoted down and grounded, the locking between the locked part 35c and the locking part 43 are unlocked, and the engagement between the connector 34 and the connector adapter 44 is released. Then, the hydrogen cylinder 30 is detached from the vehicle body 10a with the gripped part 35 of the bracket 32 and the main body of the hydrogen cylinder 30 being held. Next, holding the gripped part 35 of a new hydrogen cylinder 30 filled with hydrogen fuel and the main body of the hydrogen cylinder 30, the hydrogen cylinder 30 is moved to the top of the tray 17a as shown in FIG.20.

The hydrogen cylinder 30 is moved down to the state of FIG.21 so that the insertion holes 35a and 35b of the bracket 32 are aligned to the guide shafts 42a and 42b of the attachment 40 and the connector 34 is aligned to the fitting recess 53 of the connector adapter 44. At this moment, the peripheries of the insertion holes 35a and 35b contact the guide shafts 42a and 42b, and the static electricity charged on the hydrogen cylinder 30 and a worker is emitted to the ground via the bracket 32, attachment 40, the ground wire 50 and the parking stand 60.

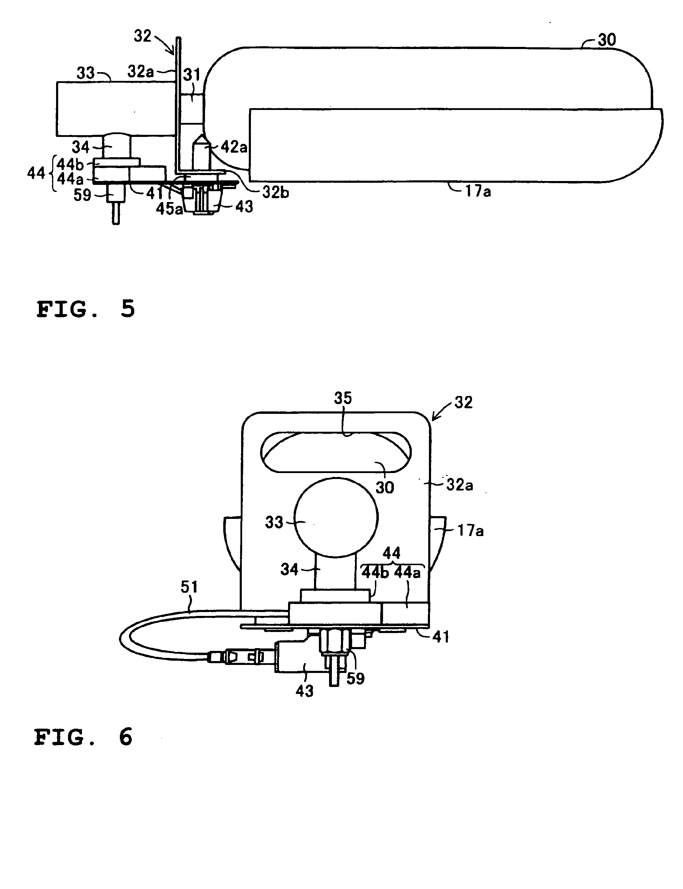

In addition, although the surface of the hydrogen cylinder 30 is coated with glass fiber and electrically insulated, the inside of the hydrogen cylinder 30 is made from aluminum and the like and may be charged with static electricity. Therefore, the static electricity charged on the hydrogen cylinder 30 can be emitted to the ground by grounding. In addition, when the hydrogen cylinder 30 is put down, the hydrogen cylinder 30 is supported by the tray 17a, the locked part 35c is locked with the locking part 43, and the connector 34 is engaged with the connector adapter 44. Thereby, the hydrogen cylinder 30 is fixed while being coupled to the attachment 40 and connected to the fuel cell system via the attachment 40 and the gas piping, and becomes the state shown in FIG.5.

In this situation, the impact between the bracket 32 and the attachment 40 is buffered by the cushions 45a and 45b, the rotation of the hydrogen cylinder 30 on the tray 17a is prevented by the bracket 32. Thereby, a stable installation of the hydrogen cylinder 30 is accomplished. In the case that the hydrogen cylinder 30 is put on the floor, the rotation of the hydrogen cylinder 30 is prevented because of the bracket 32, and storage of the hydrogen cylinder 30 is easier.

As described above, with the motorcycle 10 according to this embodiment, the attachment 40 is grounded via the ground wire 50 and the parking stand 60 when the motorcycle 10 is rested with the parking stand 60 being stood. When the bracket 32 of the hydrogen cylinder 30 is contacted to the guide shafts 42a and 42b with the gripped part 35 of the bracket 32, the static electricity charged on the hydrogen cylinder 30 and a worker is grounded via the ground wire 50 and the parking stand 60. Therefore, special activities for grounding are not necessary.

The hydrogen cylinder 30 is formed in a cartridge type, refilling of hydrogen fuel is accomplished by replacing an empty hydrogen cylinder 30 for a new hydrogen cylinder 30 filled with hydrogen fuel. Thereby, a complicated refilling activity of hydrogen fuel with a filling hose and so forth is not necessary. In addition, because the bracket 32 touches the attachment 40 connected to the ground wire 50 before the connector 34 engages with the connector adapter 44, grounding is made at the phase that the hydrogen cylinder 30 touches the attachment 40 first before the hydrogen fuel is supplied, and grounding can be made at the first phase of the replacing work.

The coupling work of the hydrogen cylinder 30 to the attachment 40 is easier because the interconnection between the connector 34 and the connector adapter 44 and the locking between the locked part 35c and the locking part 43 are made only moving the hydrogen cylinder 30 toward the attachment 40 in the motorcycle 10 according to the present embodiment. In addition, because the coupling between the hydrogen cylinder 30 and the attachment 40 is made with the engagement between the locked part 35c and the locking part 43 and the engagement between the connector 34 and the connector adapter 44, the present embodiment can achieve the secure coupling.

The motorcycle equipped with a hydrogen storing container according to the present embodiment is not limited to the embodiment described above. Various modifications may be made within proper manners. For instance, although a hydrogen storing container is configured with the hydrogen cylinder 30 in the embodiment described above, this hydrogen storing container can be devices other than a cylinder as long as they can store hydrogen. Locking mechanisms are provided in both the combination between the locked part 35c and the locking part 43 and the combination between the groove part 34a of the connector 34 and the wedge-shaped engaging part 57 of the connector adapter 44. However, a locking mechanism can be provided on either one of those. In addition, the hydrogen cylinder 30 is a cartridge type and detachable from the vehicle body 10a in the embodiment described above. However, this hydrogen cylinder 30 can be configured with one capable of refilling hydrogen fuel with being fixed on the vehicle body 10a.

To achieve the object mentioned above, the configuration of the motorcycle equipped with a hydrogen storing container according to a first preferred embodiment is characterized by including a hydrogen storing container for storing hydrogen to be supplied to a fuel cell system; and a parking stand, wherein the hydrogen storing container is placed in a vehicle body of the motorcycle equipped with a hydrogen storing container, the hydrogen storing container and the parking stand are electrically connected via a current-carrying member, and the hydrogen storing container can be grounded via the current-carrying member and the parking stand when the motorcycle equipped with a hydrogen storing container is rested with the parking stand being stood.

In the motorcycle equipped with a hydrogen storing container according to the first preferred embodiment, special work for grounding is not necessary, and the work can be omitted. That is, with the motorcycle equipped with a hydrogen storing container, it is usual to stand the parking stand and rest the motorcycle equipped with a hydrogen storing container when hydrogen fuel is refilled. Therefore, according to the first preferred embodiment, grounding is made at the same time as the parking stand is stood when hydrogen fuel is refilled to the motorcycle equipped with a hydrogen storing container, and grounding is accomplished without a conscious activity.

Another characteristic of the configuration of the motorcycle equipped with a hydrogen storing container according to a second preferred embodiment is that the current-carrying member includes an attachment having electric conductivity provided on the vehicle body and a ground wire connecting the attachment and the parking stand; the hydrogen storing container is detachably coupled to the attachment and placed in the vehicle body; and the hydrogen storing container can be connected to the parking stand via the attachment and the ground wire when the hydrogen storing container is coupled with the attachment.

The hydrogen storing container in this case can be a cartridge type such that a refilling of hydrogen fuel can be made by replacing an empty hydrogen storing container for a hydrogen storing fuel filled with hydrogen fuel. Thereby, a filling hose and the like are not necessary to be used, so a refilling work of hydrogen fuel is facilitated. Also, as described above, in the case that the hydrogen storing container is detachably coupled to the attachment, the static electricity charged on the hydrogen storing container is easily discharged to the ground because the attachment and the parking stand are connected by a ground wire.

Moreover, another characteristic of the configuration of the motorcycle equipped with a hydrogen storing container according to a third preferred embodiment is that a coupled part for coupling the hydrogen storing container to the attachment and a connecting part for supplying hydrogen are provided to the hydrogen storing container; a coupling part capable of detachably coupling to the coupled part, and a connecting part for transporting hydrogen capable of detachably connecting to the connecting part for supplying hydrogen are provided on the attachment; and the ground wire is connected to the coupling part so that the coupled part and the coupling part contact before the connecting part for supplying hydrogen and the connecting part for transporting hydrogen contact when the hydrogen storing container is connected to the attachment.

According to the above characteristic, the coupled part contacts with the coupling part of the attachment connected to the ground wire before a contact is made when the connecting part for supplying hydrogen connects to the part for transporting hydrogen, that is, before a connection for supplying hydrogen fuel in the hydrogen storing container to the vehicle body starts. Thus, grounding is made when the hydrogen storing container first contacts with the attachment before a supply of hydrogen is made, and grounding can be made at the first phase of a connecting activity.

Also, another characteristic of the configuration of the motorcycle equipped with a hydrogen storing container according to a fourth preferred embodiment is that a bracket made of an electric conductor provided with a gripped part for carrying the hydrogen storing container is mounted on the hydrogen storing container, and the coupled part is provided on the bracket. According to the above characteristic, when a worker couples the hydrogen storing container to the attachment with holding the gripped part, static electricity charged on the hydrogen storing container is emitted to the ground and static electricity charged on the worker is also emitted to the ground at the same time.

Also, another characteristic of the configuration of the motorcycle equipped with a hydrogen storing container according to a fifth preferred embodiment is that the coupled part and the coupling part include a positioning mechanism for positioning the hydrogen storing container into a predetermined position to the attachment. According to the above characteristic, because the coupled part and the coupling part can have two functions that are a function for positioning the hydrogen storing container to the attachment and a function for grounding, the structure can be made simpler and at low cost comparing with the case that both functions are realized with separated mechanisms.

Also, another characteristic of the configuration of the motorcycle equipped with a hydrogen storing container according to a sixth preferred embodiment is that an insertion hole is provided either one of the coupled part or the coupling part and a guide shaft is provided on the other such that the guide shaft can be inserted into the insertion hole while being contacted with a periphery of the insertion hole; a drum part is provided on either one of the connecting part for supplying hydrogen or the connecting part for transporting hydrogen; an interconnecting hole is provided on the other such that the drum part is fitted to the interconnecting hole and interconnects in an airtight manner; a valve body is provided on the connecting part for supplying hydrogen such that the valve body is urged to one side to block the space between the drum part and the interconnecting hole; a protruding element is provided on the connecting part for transporting hydrogen such that the protruding element urges the valve body to the other side and interconnects the drum part and the interconnecting hole when the drum part is engaged with the interconnecting hole; and the drum part and the interconnecting hole interconnect when the hydrogen storing container is made approach toward the attachment and the drum part engages with the interconnecting hole while the guide shaft is inserted into the insertion hole.

According to the above characteristic, when the drum part and the interconnecting hole configuring a connection part of the connecting part for supplying hydrogen and the connecting part for transporting hydrogen contact before they interconnect, the hydrogen container and a worker are grounded. Thus, grounding is securely made.

Also, another characteristic of the configuration of the motorcycle equipped with a hydrogen storing container according to a seventh preferred embodiment is that a locking mechanism is provided such that the locking mechanism actuates and fixes the hydrogen storing container to the attachment when the drum part engages with the interconnecting hole. According to the above characteristic, an interconnection work between the connecting part for supplying hydrogen and the connecting part for transporting hydrogen and a fixation of hydrogen storing container to the attachment by the locking mechanism is achieved just by the movement of the hydrogen storing container to the attachment, and therefore, an interconnecting work of the hydrogen storing container to the attachment is facilitated.

Also, another characteristic of the configuration of the motorcycle equipped with a hydrogen storing container according to an eighth preferred embodiment is that the locking mechanism includes a locked part and a locking part that are capable of engagement, and either one of the locked part or the locking part is provided on the hydrogen storing container and the other is provided on the attachment. In this case, the locked part or the locking part to be provided on the hydrogen storing container is preferably provided on the bracket. Thereby, a special member for providing the locked part or the locking part on the hydrogen storing container is not necessary.

Likewise, according to a preferred first aspect, there is provided a motorcycle equipped with a hydrogen storing container comprising: a hydrogen storing container for storing hydrogen to be supplied to a fuel cell system; and a parking stand, wherein the hydrogen storing container is placed in a vehicle body of the motorcycle equipped with a hydrogen storing container, the hydrogen storing container and the parking stand are electrically connected via a current-carrying member, and the hydrogen storing container can be grounded via the current-carrying member and the parking stand when the motorcycle equipped with a hydrogen storing container is rested with the parking stand being stood.

Further, according to a preferred second embodiment, the current-carrying member includes an attachment having electric conductivity provided on the vehicle body and a ground wire connecting the attachment and the parking stand; the hydrogen storing container is detachably coupled to the attachment and placed in the vehicle body; and the hydrogen storing container can be connected to the parking stand via the attachment and the ground wire when the hydrogen storing container is coupled with the attachment.

Further, according to a preferred third embodiment, a coupled part for coupling the hydrogen storing container to the attachment and a connecting part for supplying hydrogen are provided to the hydrogen storing container; a coupling part capable of detachably coupling to the coupled part, and a connecting part for transporting hydrogen capable of detachably connecting to the connecting part for supplying hydrogen are provided on the attachment; and the ground wire is connected to the coupling part so that the coupled part and the coupling part contact before the connecting part for supplying hydrogen and the connecting part for transporting hydrogen contact when the hydrogen storing container is connected to the attachment.

Further, according to a preferred fourth embodiment, a bracket made of an electric conductor provided with a gripped part for carrying the hydrogen storing container is mounted on the hydrogen storing container, and the coupled part is provided on the bracket.

Further, according to a preferred fifth embodiment, the coupled part and the coupling part include a positioning mechanism for positioning the hydrogen storing container into a predetermined position to the attachment.

Further, according to a preferred sixth embodiment, an insertion hole is provided either one of the coupled part or the coupling part and a guide shaft is provided on the other such that the guide shaft can be inserted into the insertion hole while being contacted with a periphery of the insertion hole; a drum part is provided on either one of the connecting part for supplying hydrogen or the connecting part for transporting hydrogen; an interconnecting hole is provided on the other such that the drum part is fitted to the interconnecting hole and interconnects in an airtight manner; a valve body is provided on the connecting part for supplying hydrogen such that the valve body is urged to one side to block the space between the drum part and the interconnecting hole; a protruding element is provided on the connecting part for transporting hydrogen such that the protruding element urges the valve body to the other side and interconnects the drum part and the interconnecting hole when the drum part is engaged with the interconnecting hole; and the drum part and the interconnecting hole interconnect when the hydrogen storing container is made approach toward the attachment and the drum part engages with the interconnecting hole while the guide shaft is inserted into the insertion hole.

Further, according to a preferred seventh embodiment, a locking mechanism is provided such that the locking mechanism actuates and fixes the hydrogen storing container to the attachment when the drum part engages with the interconnecting hole.

Further, according to a preferred eighth embodiment, the locking mechanism includes a locked part and a locking part that are capable of engagement, and either one of the locked part or the locking part is provided on the hydrogen storing container and the other is provided on the attachment.

Finally, according to a particularly preferred embodiment, in order to provide a motorcycle equipped with a hydrogen storing container which grounding work and refilling of hydrogen fuel are facilitated, an attachment 40 is provided on a vehicle body 10a of a motorcycle 10, and a hydrogen cylinder 30 is equipped on the vehicle body 10a in a manner such that it is capable of attaching and detaching to the attachment 40. The attachment 40 is connected with parking stand 60 by a ground wire 50, and the hydrogen cylinder 30 can be grounded via the attachment 40 and the like when the motorcycle 10 is rested with the parking stand 60 being stood. A bracket with a gripped part 35 and a locked part 35c is provided on the hydrogen cylinder 30, and a locking part 43 capable of engagement with the locked part 35c is provided on the attachment 40. In addition, a connector 34 is provided on the hydrogen cylinder 30, and a connector adapter 44 capable of engagement with the connector 34 is provided on the attachment 40.

## Claims

1. Motorcycle comprising a fuel-cell system, a replaceable hydrogen storing container (30) for storing hydrogen to be supplied to the fuel-cell system, said hydrogen storing container (30) being supported by a vehicle body (10a) of the motorcycle, **characterized by** a parking stand (60), wherein the hydrogen storing container (30) and the parking stand (60) are electrically connected via a current-carrying member, such that the hydrogen storing container (30) can be grounded via the current-carrying member and the parking stand (60) when the motorcycle is rested on the parking stand (60).

2. Motorcycle according to claim 1, **characterized in that** the current-carrying member includes an attachment means (40) provided on the vehicle body (10a) and having electric conductivity, and a ground wire (50) connecting the attachment means (40) and the parking stand (60); wherein the hydrogen storing container (30) is detachably coupled to the attachment means (40) and is connectable to the parking stand (60) via the attachment means (40) and the ground wire (50) for grounding when the hydrogen storing container (30) is coupled with the attachment means (40).

3. Motorcycle according to claim 2, **characterized in that** a first coupling part (32,35a,35b) for coupling the hydrogen storing container (30) to the attachment means (40) and a first connecting part (34) for supplying hydrogen are provided to the hydrogen storing container (30); wherein a second coupling part (41,42a,42b) capable of detachably coupling to the first coupling part (32,35a,35b), and a second connecting part (44) for transporting hydrogen capable of detachably connecting to the first connecting part (34) are provided on the attachment means (40); and wherein the ground wire (50) is connected to the second coupling part (41,42a,42b) so that the first coupling part (32,35a,35b) and the second coupling part (41,42a,42b) contact before the first connecting part (34) for supplying hydrogen and the second connecting part (44) for transporting hydrogen contact each other when the hydrogen storing container (30) is connected to the attachment means (40).

4. Motorcycle according to claim 3, **characterized in that** a bracket made (32) of an electric conductor provided with a gripped part (35) for carrying the hydrogen storing container (30) is mounted on the hydrogen storing container (30), and wherein the first coupling part is provided on the bracket (32).

5. Motorcycle according to claim 4, **characterized in that** the first coupling part (32,35a,35b) and the second coupling part (41,42a,42b) include a positioning mechanism for positioning the hydrogen storing container (30) into a predetermined position to the attachment means (40).

6. Motorcycle according to one of the claims 3 to 5, **characterized in that** an insertion hole (35a,35b) is provided either one of the first coupling part or the second coupling part, and a guide shaft (42a,42b)is provided on the respectively other such that the guide shaft (42a,42b) is insertable into the insertion hole (35a,35b) while being contacted with a periphery of the insertion hole (35a,35b).

7. Motorcycle according to claim 6, **characterized by**
a drum part (34) provided on either one of the first connecting part for supplying hydrogen or the second connecting part (44) for transporting hydrogen;
an interconnecting hole (53) provided on the respectively other such that the drum part (34) is fitted to the interconnecting hole (53) and interconnects in an airtight manner;
a valve body (37a) provided on the first connecting part (34) for supplying hydrogen such that the valve body (37a) is urged to one side to block the space between the drum part (34) and the interconnecting hole (53);
a protruding element (54) provided on the second connecting part (44) for transporting hydrogen such that the protruding element (54) urges the valve body (37a) to the other side and interconnects the drum part and the interconnecting hole (53) when the drum part (34) is engaged with the interconnecting hole (53);
wherein the drum part (34) and the interconnecting hole (53) interconnect when the hydrogen storing container (30) is made approach toward the attachment means (40) and the drum part (34) engages with the interconnecting hole (53) while the guide shaft (42a,42b) is inserted into the insertion hole (35a,35b).

8. Motorcycle according to claim 7, **characterized in that** a locking mechanism (35c,43) is provided such that the locking mechanism (35c,43) actuates and fixes the hydrogen storing container (30) to the attachment means (40) when the drum (34) part engages with the interconnecting hole (53).

9. Motorcycle according to claim 8, **characterized in that** the locking mechanism includes a locked part (35c) and a locking part (43) that are capable of engagement, and either one of the locked part (35c) or the locking part (43) is provided on the hydrogen storing container (30) and the other is provided on the attachment means (40).

## Patentansprüche

1. Motorrad, aufweisend ein Brennstoffzellensystem, einen austauschbaren Wasserstoffspeicherbehälter (30) zum Speichern von Wasserstoff, um in das Brennstoffzellensystem zugeführt zu werden, wobei der Wasserstoffspeicherbehälter (30) durch eine Fahrzeugkarosserie (10a) des Motorrades getragen wird, **gekennzeichnet durch** einen Parkständer (60), wobei der Wasserstoffspeicherbehälter (30) und der Parkständer (60) über ein stromführendes Teil derart elektrisch verbunden sind, dass der Wasserstoffspeicherbehälter (30) über das stromführende Teil und den Parkständer (60) geerdet werden kann, wenn das Motorrad auf dem Parkständer (60) parkt.

2. Motorrad nach Anspruch 1, **dadurch gekennzeichnet, dass** das stromführende Teil eine Verbindungseinrichtung (40) enthält, vorgesehen an der Fahrzeugkarosserie (10a), die elektrisch leitfähig ist, und ein Erdungsdraht (50), der die Verbindungseinrichtung (40) und den Parkständer (60) verbindet; wobei der Wasserstoffspeicherbehälter (30) an der Verbindungseinrichtung (40) lösbar gekuppelt ist und mit dem Parkständer (60) über die Verbindungseinrichtung (40) und den Erdungsdraht (50) zum Erden verbunden ist, wenn der Wasserstoffspeicherbehälter (30) mit der Verbindungseinrichtung (40) gekuppelt ist.

3. Motorrad nach Anspruch 2, **dadurch gekennzeichnet, dass** ein erstes Kupplungsteil (32, 35a, 35b) zum Kuppeln des Wasserstoffspeicherbehälters (30) mit der Verbindungseinrichtung (40) und ein erstes Verbindungsteil (34) zum Zuführen von Wasserstoff an dem Wasserstoffspeicherbehälter (30) vorgesehen sind; wobei ein zweites Kupplungsteil (41, 42a, 42b), das in der Lage ist, mit dem ersten Kupplungsteil (32, 35a, 35b) lösbar zu kuppeln, und ein zweites Verbindungsteil (44) zum Transportieren des Wasserstoffs, das in der Lage ist, mit dem ersten Verbindungsteil (34) lösbar zu verbinden, an der Verbindungseinrichtung (40) vorgesehen sind; und wobei der Erdungsdraht (50) mit dem zweiten Kupplungsteil (41, 42a, 42b) so verbunden ist, dass das erste Kupplungsteil (32, 35a, 35b) und das zweite Kupplungsteil (41, 42a, 42b) in Kontakt sind, bevor das erste Verbindungsteil (34 zum Zuführen von Wasserstoff und das zweite Verbindungsteil (44) zum Transportieren von Wasserstoff miteinander in Kontakt sind, wenn der Wasserstoffspeicherbehälter (30) mit der Verbindungseinrichtung (40) verbunden ist.

4. Motorrad nach Anspruch 3, **dadurch gekennzeichnet, dass** das eine Halterung (32), hergestellt aus einem elektrischen Leiter, versehen mit einem Griffteil (35) zum Tragen des Wasserstoffspeicherbehälters (30), an dem Wasserstoffspeicherbehälter (30) montiert ist, und wobei das erste Kupplungsteil an der Halterung (32) vorgesehen ist.

5. Motorrad nach Anspruch 4, **dadurch gekennzeichnet, dass** das erste Kupplungsteil (32, 35a, 35b) und das zweite Kupplungsteil (41, 42a, 42b) eine Positionierungsvorrichtung zum Positionieren des Wasserstoffspeicherbehälters (30) in einer vorbestimmten Position zu der Verbindungseinrichtung (40) enthalten.

6. Motorrad nach einem der Ansprüche 3 bis 5, **dadurch gekennzeichnet, dass** eine Einsetzbohrung (35a, 35b) an entweder einem von dem ersten Kupplungsteil oder dem zweiten Kupplungsteil vorgesehen ist und eine Führungswelle (43a, 42b) an dem jeweils anderen Teil derart vorgesehen ist, dass die Führungswelle (43a, 42b) in die Einsetzbohrung (35a, 35b) einsetzbar ist, während sie mit einem Umfang der Einsetzbohrung (35a, 35b) in Kontakt ist.

7. Motorrad nach Anspruch 6, **gekennzeichnet durch**
ein Trommelteil (34), vorgesehen an entweder dem ersten Verbindungsteil zum Zuführen des Wasserstoffs oder dem zweiten Verbindungsteil (44) zum Transportieren des Wasserstoffs;
eine Verbindungsbohrung (53), vorgesehen derart an dem jeweils anderen Teil, derart, dass das Trommelteil (34) in die Verbindungsbohrung (53) eingesetzt ist und in einer luftdichten Weise miteinander verbindet;
einen Ventilkörper (37a), vorgesehen an dem ersten Verbindungsteil (34) zum Zuführen von Wasserstoff derart, dass der Ventilkörper (37a) zu einer Seite gedrückt wird, um den Raum zwischen dem Trommelteil(34) und der Verbindungsbohrung (53) zu blockieren;
ein Vorsprungsbauteil (54), vorgesehen an dem zweiten Verbindungsteil (54) zum Transportieren des Wasserstoffs derart, dass das Vorsprungsbauteil (54) den Ventilkörper (37a) zu der anderen Seite drückt und das Trommelteil und die Verbindungsbohrung (53) miteinander verbindet, wenn das Trommelteil (34) mit der Verbindungsbohrung (53) im Eingriff ist;
wobei das Trommelteil (34) und die Verbindungsbohrung (53) sich miteinander verbinden, wenn der Wasserstoffspeicherbehälter (30) veranlasst wird, sich in Richtung zu der Verbindungseinrichtung (40) zu nähem, und das Trommelteil (34) mit der Verbindungsbohrung (53) in Eingriff kommt, während die Führungswelle (43a, 42b) in die Einsetzbohrung (35a, 35b) eingesetzt wird.

8. Motorrad nach Anspruch 7, **dadurch gekennzeichnet, dass** das eine Verriegelungsvorrichtung (35c, 43) vorgesehen ist derart, dass die Verriegelungsvorrichtung (35c, 43) den Wasserstoffspeicherbehälter (30) an der Verbindungseinrichtung (40) betätigt und befestigt, wenn das Trommelteil (34) mit der Verbindungsbohrung (53) in Eingriff kommt.

9. Motorrad nach Anspruch 8, **dadurch gekennzeichnet, dass** das die Verriegelungsvorrichtung ein verriegeltes Teil (35c) und ein verriegelndes Teil (43) enthält, die in der Lage sind, in Eingriff zu kommen, und entweder das verriegelte Teil (35c) oder das verriegelnde Teil (43) an dem Wasserstoffspeicherbehälter (30) vorgesehen ist und das andere Teil an der Verbindungseinrichtung (40) vorgesehen ist.

## Revendications

1. Motocycle comprenant un système de pile à combustible, un réservoir d'hydrogène remplaçable (30) pour stocker l'hydrogène destiné à alimenter en hydrogène le système de pile à combustible, ledit réservoir d'hydrogène (30) étant supporté par un corps de véhicule (10a) du motocycle, **caractérisé par** une béquille de stationnement (60), dans lequel le réservoir d'hydrogène (30) et la béquille de stationnement (60) sont connectés électriquement par l'intermédiaire d'un élément de transport de courant, de telle sorte que le réservoir d'hydrogène (30) peut être mis à la masse par l'intermédiaire de l'élément de transport de courant et de la béquille de stationnement (60) lorsque le véhicule repose sur la béquille de stationnement (60).

2. Motocycle selon la revendication 1, **caractérisé en ce que** l'élément de transport de courant comprend des moyens de fixation (40) disposés sur le corps de véhicule (10a) et ayant une conductivité électrique, et un fil de masse (50) qui connecte les éléments de fixation (40) et la béquille de stationnement (60) ; dans lequel le réservoir d'hydrogène (30) est accouplé de manière amovible aux moyens de fixation (40) et peut être connecté à la béquille de stationnement (60) par l'intermédiaire des moyens de fixation (40) et du fil de masse (50) à des fins de mise à la masse lorsque le réservoir d'hydrogène (30) est accouplé aux moyens de fixation (40).

3. Motocycle selon la revendication 2, **caractérisé en ce qu'**une première partie d'accouplement (32, 35a, 35b) destinée à accoupler le réservoir d'hydrogène (30) aux moyens de fixation (40) et une première partie de connexion (34) destinée à une alimentation en hydrogène sont disposées sur le réservoir d'hydrogène (30) ; dans lequel une seconde partie d'accouplement (41, 42a, 42b) capable de s'accoupler de manière amovible à la première partie d'accouplement (32, 35a, 35b), et une seconde partie de connexion (44) destinée au transport de l'hydrogène capable de se connecter de manière amovible à la première partie de connexion (34) sont disposées sur les moyens de fixation (40) ; et dans lequel le fil de mise à la masse (50) est connecté à la seconde partie d'accouplement (41, 42a, 42b) de telle sorte que la première partie d'accouplement (32, 35a, 35b) et la seconde partie d'accouplement (41, 42a, 42b) sont en contact avant que la première partie de connexion (34) destinée à l'alimentation en hydrogène et la seconde partie de connexion (44) destinée au transport de l'hydrogène soient en contact l'une avec l'autre, lorsque le réservoir d'hydrogène (30) est connecté aux moyens de fixation (40).

4. Motocycle selon la revendication 3, **caractérisé en ce qu'**un support (32) se composant d'un conducteur électrique comportant une partie de prise (35) destinée à supporter le réservoir d'hydrogène (30) est monté sur le réservoir d'hydrogène (30), et dans lequel la première partie d'accouplement est disposée sur le support (32).

5. Motocycle selon la revendication 4, **caractérisé en ce que** la première partie d'accouplement (32, 35a, 35b) et la seconde partie d'accouplement (41, 42a, 42b) comprennent un mécanisme de positionnement destiné à positionner le réservoir d'hydrogène (30) sur une position prédéterminée dans les moyens de fixation (40).

6. Motocycle selon l'une des revendications 3 à 5, **caractérisé en ce qu'**un orifice d'introduction (35a, 35b) est aménagé soit dans l'une de la première partie d'accouplement, soit dans la seconde partie d'accouplement, et qu'un arbre de guidage (42a, 42b) est disposé est disposé respectivement sur l'autre partie, de telle sorte que l'arbre de guidage (42a, 42b) peut être introduit à l'intérieur du trou d'introduction (35a, 35b) tout en étant en contact avec une périphérie du trou d'introduction (35a, 35b).

7. Motocycle selon la revendication 6, **caractérisé par** :
une partie de tambour (34) disposée soit sur l'une de la première partie de connexion destinée à l'alimentation en hydrogène, soit sur la seconde partie de connexion (44) destinée au transport de l'hydrogène ;
un orifice d'interconnexion (53) aménagé respectivement sur l'autre partie de connexion de telle sorte que la partie de tambour (34) est montée dans un orifice d'interconnexion (53) et se trouve en connexion de manière étanche à l'air ;
un corps de soupape (37a) disposé sur la première partie de connexion (34) à des fins d'alimentation en hydrogène de telle sorte que le corps de soupape (37a) est poussé sur un côté afin de bloquer l'espace qui existe entre la partie de tambour (34) et l'orifice d'interconnexion (53) ;
un élément en saillie (54) disposé sur la seconde partie de connexion (44), afin de transporter de l'hydrogène de telle sorte que l'élément en saillie (54) pousse le corps de soupape (37a) sur l'autre côté et met en connexion la partie de tambour et l'orifice d'interconnexion (53), lorsque la partie de tambour (34) s'engage avec l'orifice d'interconnexion (53) ; dans lequel la partie de tambour (34) et l'orifice d'interconnexion (53), connectés entre eux lorsque le réservoir d'hydrogène (30) se trouve à proximité des moyens de fixation (40) et que la partie de tambour (34) s'engage avec l'orifice d'interconnexion (53), alors que l'axe de guidage (42a, 42b) est introduit à l'intérieur de l'orifice d'introduction (35a,35b).

8. Motocycle selon la revendication 7, **caractérisé en ce qu'**un mécanisme de verrouillage (35C, 43) est aménagé de telle sorte que le mécanisme de verrouillage (35c, 43) met en action et fixe le réservoir d'hydrogène (30) sur les moyens de fixation (40) lorsque la partie de tambour (34) s'engage avec l'orifice d'interconnexion (53).

9. Motocycle selon la revendication 8, **caractérisé en ce que** le mécanisme de verrouillage comprend une partie verrouillée (35c) et une partie de verrouillage (43) qui sont capables de s'engager, et l'une ou l'autre de la partie verrouillée (35c) ou de la partie de verrouillage (43), qui est montée sur le réservoir d'hydrogène (30), et l'autre partie est montée sur les moyens de fixation (40).
